# EUROPEAN PATENT SPECIFICATION

(11) **EP 2 743 006 B1**
(45) Date of publication and mention of the grant of the patent: **11.03.2015**
(21) Application number: 12197500.7
(22) Date of filing: 17.12.2012
(51) Int. Cl.: B05D 1/02, G09B 23/28, B05D 1/26, B05D 1/18

(54) **Dummy device as a surrogate of a coated implant**
Dummy-Vorrichtung als Surrogat eines beschichteten Implantats
Dispositif factice en tant que substitut d'un implant enrobé

(43) Date of publication of application: 18.06.2014
(73) Proprietor: Biomet Deutschland GmbH, 14167 Berlin (DE)
(72) Inventor: Mannel, Dr. Henrich, 12203 Berlin (DE); Sewing, Dr. Andreas, 12163 Berlin (DE); Baranowski, Norbert, 15831 Mahlow (DE)
(74) Representative: Morawski, Birgit

(56) References cited:
- KURT V. WOLF ET AL: "An investigation of adhesion in drug-eluting stent layers", JOURNAL OF BIOMEDICAL MATERIALS RESEARCH PART A, vol. 87A, no. 1, 27 February 2008 (2008-02-27), pages 272-281, XP055066053, ISSN: 1549-3296, DOI: 10.1002/jbm.a.31860

## Description

The present invention relates to a dummy device as a surrogate of a coated implant for coating properties according to the preamble of claim 1 and the use of such a dummy as surrogate according to claim 11.

A major problem in clinical application of implants, such as endoprostheses for the permanent substitution of joints such as the hip joint, is mechanic anchoring of the implants and/or prevention of infection. To ameliorate this anchoring of a prosthesis in the bone, bioactive coatings like bone like coatings, peptide coatings such as RGD coatings or antibiotic coatings are known which promote the ingrowth of the prosthesis or implant into the bone and help to avoid implant associated infections.

In particular in case of pharmaceutical coatings it is necessary that a defined amount of coating substance per area of the implant can be applied onto the implant in a verifiable manner. Such a verifiable coating density is also important whenever certain effects shall be achieved using the coating substance or if maximal tissue-damaging dosages shall not be exceeded or if different substances are used which exhibit synergistic effects in an exactly defined composition.

Such coatings can be applied in different ways. The most common techniques are coating processes like spray coating, dip coating, ink jet coating or electrochemical coating.

In case of spray coating, which is for example described in U.S. patent 6,669,980, spray nozzles are used which are moved relatively to the surface of the implant to be coated. These nozzles spray the desired substance continuously onto the implant. Disadvantageously, the density of the coating applied by this method is often not known and furthermore not homogeneous, in particular, if complex structures like conic, screw-like or star-shaped structures or recesses or elevations are to be coated, which is often the case when orthopaedic implants are treated.

In case of dip coating, the implant is dipped into a solution of the coating substance and left in the solution for a desired period of time. Again, an inhomogeneous coating in case of complex structures as well as difficulties in determining and achieving specific density of coating occurs. Further, a coating by several substances is limited by the solubility of the respective substances.

A further problem for using coated implants is the quality control of the coatings which has to be carried out not only during the clinical approval process but also on a regular basis during the manufacturing process.

For most of the tests that need to be conducted for coated implants, such as non-clinical testing, stability studies and batch release testing, use of a considerable number of implants would be required in order to establish a reliable set of data.

In order to reduce the number of implants needed for such studies, Kurt v. Wolf et al. suggest the use of two dimensional surrogates, like coupon shaped samples, having the same surface characteristics as the stent to be examined (Journal of Biomedical Materials Research Part A, Vol. 87A, No.1, p.272-281).

Additionally, in animal studies and other non-clinical testing it is impossible to use human sized implants. Also, in stability studies the storage space needed would be fairly large.

Furthermore, the process of quality control for a coated implant includes usually a removal of the coating from the implant surface for determining the coating density and coating regularity and further coating properties. The implant used for quality control cannot be used for any further application and has finally to be discharged. Thus, the process of quality control is accompanied by rather high material costs.

It is thus desirable to provide an approach of simplifying the process of quality control and reducing the overall costs during such a process.

This object is achieved by a dummy device according to claim 1 and the use thereof according to claim 11.

Accordingly, a dummy device is provided as a surrogate of an implant for mimicking the coating process and which can replace the coated implant for the purpose of determining properties of the applied coating, such as for quality control.

The dummy device comprises singular pieces made of a material used for manufacturing the implant. The singular pieces are assembled on a base body to form the dummy device such for the purpose of coating. After the dummy device has been coated the singular pieces are dissembled from the base body such that the now coated singular pieces can be used for determining coating density and coating properties.

Thus, a dummy device is provided which may serve as a surrogate mimicking an implant in a coating process.

For this purpose the surface of an implant is preferably divided into singular sections corresponding to said implant surface. These singular sections can have different shapes and are usually adapted such that they cover most of the implant surface. The singular sections correspond thereby to the singular pieces mentioned above.

The singular pieces are arranged on the base body such that preferably the complete or almost complete surface of the base body is covered by the singular pieces. Due to the use and the arrangement of the singular pieces on the base body, which are subsequently coated, the total surface of the dummy device can be divided in single sections corresponding to the complete implant surface.

Furthermore, by using the dummy device it is now possible to mimic the complete process of coating an implant. In particular it is possible to adjust the coating process such that in case a coating apparatus for spray coating or ink jet coating is used the operating parameters for coating the dummy device such as distance between the dummy device and the nozzle device of the coating apparatus and coating velocity are the same as the operating parameters for coating the implant. Thus, the dummy device undergoes the same coating process with the same parameters as the implant to be coated. The dummy device is thereby homogeneous coated along its complete body. After dissembling of the dummy device the singular now coated pieces can be used for the quality tests such as required for a spatially or locally resolved quality control. This is also applicable for other coating methods such as dip coating or electrochemical coating.

In a further embodiment the singular pieces to be assembled on the base body can have different shapes. It is preferred, if the singular pieces are shaped disc-like and may have a annular shape. However, it is also possible that the singular disc-like pieces have a hexagonal, triangular or quadratic shape or any other suitable shape which may be selected depending on the size and shape of the base body.

The geometric dimensions of the disk-like pieces various also in dependency on the base body size and shape. For instance, the disk like piece may have a diameter between 5 and 50 mm, preferably between 10 and 30 mm, most preferably between 15 and 25 mm, in particular preferred 20 mm. The thickness of the disk like piece may be in a range between 0.5 and 5 mm, preferably 1 and 3 mm, most preferably 2 mm.

As mentioned above the singular pieces are assembled on a base body resembling the shape of an implant for forming the dummy device and are dissembled from the base body after coating by the coating apparatus. Thus, the dummy or test device comprises removable discs as surrogates for the implant surface.

It is preferred if the singular pieces are assembled on a base body in corresponding recesses in the surface of the base body. For this purpose the singular pieces such as discs may be removable incorporated into the appropriate recesses in surface of the dummy device. The dimension of discs and surface recesses preferably correspond to each other in order to guarantee a tight fit of the discs in the recess. In addition, the singular pieces may be also fixed on the base body by using a suitable adhesion means such as glue or alike.

As previously mentioned the base body may resemble the shape of an implant. Thus, in a variant of the present dummy device the base body comprises a cylindrical shape, in particular a hexagonal cylindrical shape for mimicking a hip endoprosthesis, in particular a femoral shaft. When using a hexagonal cylinder as base body the cylinder is preferably hollow. This allows for access to the non-coated backside of the singular pieces and an easy dissembling as explained in more detail below.

In another variant the base body comprises a shape of a half shell for mimicking a knee implant or mimicking an acetabular cup.

As described above the singular pieces such as singular discs are arranged on the base body such that a high percentage of the base body surface is covered by the discs such that the singular pieces such as discs represent the whole surface of the endoprosthesis or implant.

For example, in an embodiment a base body of a hexagonal cylindrical shape having six flat longitudinal areas extending along the body length is used. On each of the six flat areas of the base body it is possible to arrange for instance six circular shaped discs in corresponding surface recesses. Thus, each of the six flat areas of the hexagonal cylindrical base body is covered by six discs; in total 36 discs can be placed on such a hexagonal cylindrical base body.

The base body may be manufactured in a conventional process using conventional materials such as metal, metal alloys, plastic, silicon and alike. It is however preferred if the singular pieces as well as the base body are made of same material as the implant. It is in particular preferred if the material is the titanium alloy TiAl6V4. It is in particular preferred if base body and singular pieces have the same surface finishing which is discussed below.

In a further preferred embodiment the singular pieces have the shape of a cylinder. In this case the cylinder is not hollow and of small dimension and are used as surrogates for nails. The base body is preferably a rod or bar along which the cylinders as nail surrogates are arranged. The dummy device is formed in this case by a rod as base body with solid, small dimensioned cylinders. After coating the cylinders are dissembled from the rod for further tests and analysis. Such an arrangement can also be described as a number of singular cylindrical pieces arranged on a base body like a rod like a chain. These types of dummy devices may be used as surrogates for animal implants, in particular small animal like rabbit, implantation studies and/or subcutaneous implantation. Height h and radius r of the cylindrical pieces can thus be adjusted according to the animal to be tested.

In general any type of arrangement may be used as dummy device as long as the dummy device mimics an implant and as long as the dummy device can be coated in a three dimensional manner by any coating method using the same working parameters as for normal implants.

In a further embodiment the surface of the singular pieces used in the present dummy device is surface treated, such as sandblasted or glass bead blasted. It is also possible that the surface of the base body may be treated in the same or different manner as the singular pieces or may be not surface treated at all.

In a yet further embodiment the coating is selected from a group comprising at least one antibiotic or a combination of at least two antibiotics. The antibiotics may be primarily intracellular active antibiotics working as inhibitor of bacterial RNA polymerase, as inhibitor of gyrase or as inhibitor of bacterial protein synthesis and/or primarily extracellular active antibiotics working as inhibitor of bacterial cell wall synthesis or as inhibitor of bacterial protein synthesis or destabilise or rupture the bacterial cell wall directly.

The antibiotics may be selected from a group comprising ansamycins, particularly rifamycins such as rifampin, rifabutin, rifapentine or rifamixin; fluoroquinolones such as moxifloxacin ; streptogramins such as quinupristin or dalfopristin. In an embodiment, a combination of quinupristin and dalfopristin; fosfomycin; glycopeptides such as vancomycin and teicoplanin; polypeptides such as bacitracin, polymyxin B as well as other polymyxins and daptomycin; aminoglycosides such as arbekacin. In particular rifampicin, fosfomycin or a combination thereof are chosen.

The coating may be also in form of at least one porous coating, in particular calcium phosphate coating such as hydroxyapatite coating opt. with additives like collagen and other bioactive compounds.

The present dummy device, in particular the coated singular pieces after dissembling the same from the base body, is / are used as surrogate of a coated implant in quality control for determining coating properties, such as coating density and others.

Coating properties which may be tested include different biocompatible properties such as cytotoxicity of the coating, material mediated pyrogenicity, acute systemic toxicity, genotoxicity, sensitisation, irritation. However, any other possible characteristic or property of interest may be tested using the present dummy device, in particular the coated singular pieces after dissembling the same from the base body.

In order to analyse a surface coating of an implant using a respective dummy device as surrogate the following steps are carried out:
a) assembling the singular pieces on a base body for forming the dummy device;
b) coating the dummy device with a suitable coating material using a coating method;
c) dissembling the singular pieces from base body after coating; and
d) analysing the coated singular pieces by determining coating properties.

In an embodiment of the present method the singular pieces are assembled on a base body in step a), in particular on the surface of the base body by incorporating the singular pieces in corresponding recesses on the surface of the base body resembling the shape of the implant to be tested.

The coating of the dummy device in step b) can be carried out using any known coating methods such as dip coating, spray coating, ink jet coating or electrochemical coating which are well known to a person in the art.

A preferred coating method is the ink jet coating which may be carried out using an apparatus which comprises a holding device for holding the dummy device, a nozzle device for applying droplets of a coating substance onto the dummy device held by the holding device and a controller. The controller controls the movements of the holding device and/or of the nozzle device as well as the production of droplets of a coating substance to be ejected by the nozzle device. The holding device and/or the nozzle device is/are movable with respect to each other such that droplets of a coating substance ejected from the nozzle device can be applied onto essentially all parts of an implant held by the holding device. In a particular preferred embodiment of the analysing method the coating apparatus is adjusted such that the operating parameters for coating the dummy device such as distance between dummy device and nozzle device and coating velocity are the same as the operating parameters for coating the implant.

The dissembling of the coated singular pieces from the base body after finishing the coating process is carried out dependent on structure of the base body. Any method can be used. It has however to be guaranteed that the coating is not damaged or scratched.

For instance if a hexagonal hollow cylinders is used as base body then it is conceivable to push the discs used as singular pieces out of the base body from the inside of the hollow cylinder. This may be done by simply inserting a suitable tool into the inside of the hollow cylinder and pressing the discs out of the base body.

It is also conceivable to simply shake the dummy device and to loosen up the coated pieces.

When using a dummy device made of a rod as base body and cylinders aligned along said rod then it is conceivable to either move the cylinders from the rod or also to break the rod between the cylinders.

After coating and opt. dissembling the coated dummy device comprising the base body and the singular pieces or the singular coated pieces alone can be subsequently packaged and sterilized in the same was as the real prostheses.

In a preferred embodiment the singular coated pieces are used as surrogates in different biocompatibility tests.

For instance, the coated singular pieces such as discs coated with antibiotics like rifampicin and/or fosfomycin may be tested for different biocompatible properties such as cytotoxicity of the coating, material mediated pyrogenicity, acute systemic toxicity, genotoxicity, sensitisation and/or irritation.

However, the most important quality parameter of the coating is coating density of the antibiotics on the implant surface which can easily and inexpensive be tested using the coated discs.

Further details of the invention are explained with reference to different figures by the means of various exemplary embodiments. In the Figures:
- Fig. 1: shows a schematic depiction of a hip endoprosthesis placed in a coating apparatus as comparative example;
- Fig. 2: shows a schematic depiction of a first embodiment of the present invention placed in a coating apparatus,
- Fig. 3: shows a coated singular piece in form of a circular disc,
- Fig. 4: shows a schematic depiction of a second embodiment of the present invention, and
- Fig. 5: shows a schematic depiction of a third embodiment of the present invention

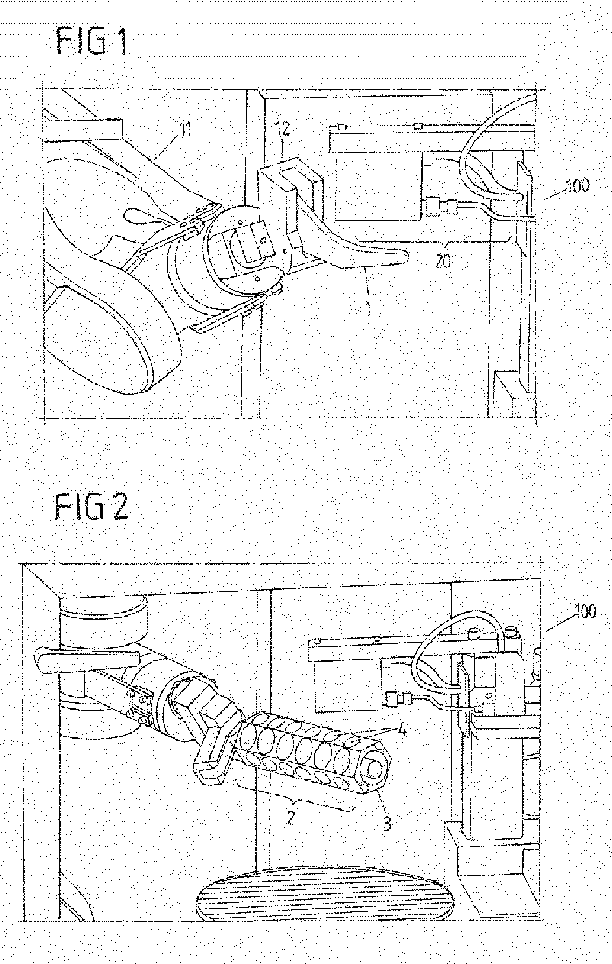

Figure 1 shows a hip endoprostheses 1 placed in a coating apparatus 100. The coating apparatus 100 comprises a manipulator arm 11 which is mounted on its one end to a base (not shown). On the other end of the manipulator arm 11 which is remote to that end mounted to the base, an implant receptacle 12 is provided. The implant receptacle 12 is arranged and constructed to hold an implant 1 which is also shown in Figure 1.

Further, a nozzle device 20 comprising a nozzle is provided. The nozzle device 20 is arranged with respect to the holding device 10 such that the implant 1 can be brought in any desired position closely in front of the nozzle so that droplets of the coating substance can be sprayed onto the surface of the implant 1.

When operating such a coating apparatus it is possible to provide a homogenous coating on any implant.

Figure 2 shows a first embodiment of the present dummy device 2 placed in a coating apparatus 100 as described for Figure 1. The dummy device comprises a hexagonal cylindrical base body 3 and circular singular pieces 4.

The base body 3 is here shaped to resemble a conventional hip implant. The femoral stem or shaft of the hip implant is represented by the hexagonal cylindrical base body 3.

As deducible from Figure 2 the base body 3 has a hexagonal cylindrical shape with six flat longitudinal areas extending along the body length. On each of the six flat areas of the base body 3 six circular shaped discs 4 are arranged in their corresponding recesses of the base body surface. Thus, each of the six flat areas of the hexagonal cylindrical base body is covered by six discs; in total 36 discs are placed on the hexagonal cylindrical base body 3.

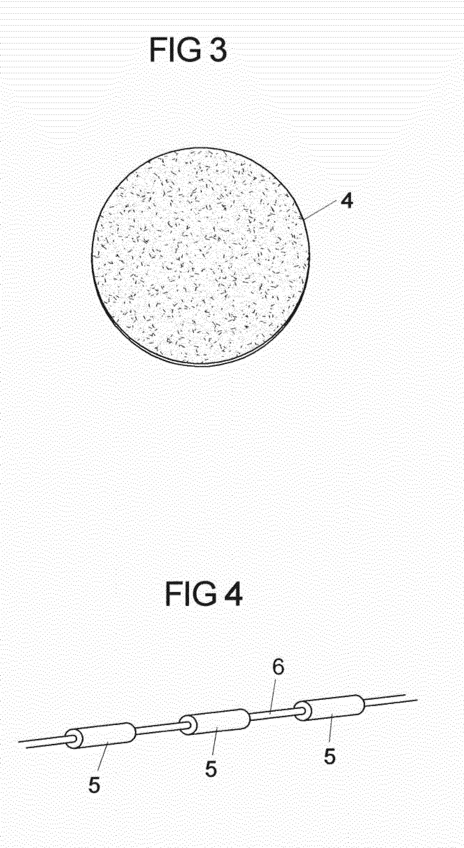

In Figure 3 an example of a circular disc 4 is shown which may be used as a singular piece in a base body forming a dummy device as shown and described by the means of Figure 2.

Typically such a disc may have a diameter of about 2cm and a surface area of about 3.14 cm². Such a disc may be typically coated using an antibiotic composition of 60 µg/cm² rifampicin and 300 µg/cm² fosfomycin. The disc is coated with the antibiotics when placed and arranged in a base body such as the hexagonal cylindrical base body of Figure 2.

The dummy device of base body and circular disc is placed in the coating apparatus and undergoes a coating process having the same operating parameters as the implant. After dissembling the now coated circular discs from the base body the coated disc can be either separately packaged and stored or can be immediately used for different biocompatibility tests such as cytotoxicity tests, acute systemic toxicity, genotoxicity and others. Before coating the disc may be surface treated by the means of sandblasting or glass beat blasting.

In Figure 4 a second embodiment of a dummy device is shown. In this case, cylindrical pieces 5 as surrogates for nails having a radius of 2 mm and a length or height of about 6 mm. The cylindrical pieces 5 are aligned on a rod 6 thus forming a chain of cylindrical pieces. Any number of cylindrical pieces 5 may thereby be used. The cylindrical pieces 5 may also have undergone a surface treatment such as sandblasting. A chain formed by cylindrical pieces 5 on the rod 6 in this manner may represent a dummy device which can be placed in a suitable holding device of a coating apparatus for coating purposes or can be coated by dip-coating or electrochemical coating. After the coating process the now coated cylindrical pieces 5 (for instance coated with 60 µg/cm² rifampicin and 300 µg/cm² fosfomycin) may be dissembled from the rod 6 and may be used in animal tests, in particular small animal tests like rabbit tests, implantation studies and/or subcutaneous implantation.

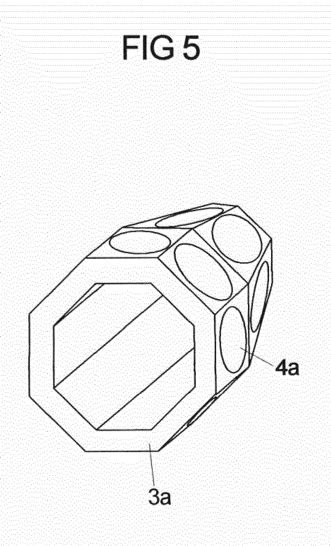

Fig. 5 shows a third embodiment of a dummy device within the meaning of the present invention. Here the base body 3a is shaped as a half shell resembling an acetabular cup. Circular discs 4a are arranged on the outer surface of the shell. After coating of the dummy device using any known coating method the now coated circular discs are removed from the base body for analysis or any other use.

### Example

An embodiment of the present dummy device and its use is further described in the following example.

The mean length of a hip stem is approximately 200 mm and the mean diameter of a cup is approximately 58 mm, both with a mean surface area of approximately 50 cm². For most of the tests that need to be conducted for coated implants, such as non-clinical testing, stability studies and batch release testing, use of a considerable number of implants would be required in order to establish a reliable set of data. Additionally, in animal studies and other non-clinical testing it is impossible to use human sized implants. Also, in stability studies the storage space needed would be fairly large. In order to overcome these issues, a dummy device concept with removable discs that will be used as surrogates has been developed. The discs are representative for the whole prosthesis. The surrogates are made of the same material (titanium alloy TiAl6V4) with the same kind of surface variants as the real prostheses and they are antibiotic coated with the same process as used for coating of the real prostheses. The most important quality parameter of the coating is the coating density of the two antibiotics on the implant surface. Therefore, equal coating densities are demonstrated for the implants compared with the surrogate discs under similiar coating conditions.

The dummy device itself has space for 6 x 6 (six per flat area times six areas) metal discs with a diameter of approximately 20 mm and a thickness of approximately 2 mm (see also Figure 2).

Establishing the data to qualify the dummy device and the surrogate discs was part of systematic testing. Tests have shown that specified coating densities can be achieved. Parameters such as the distance between the surface to be coated and the ink-jet, the antibiotic solution / suspension flow and the speed of the robot arm are identical for the implants and the dummy device.

Quality controls, with few exceptions, have been performed using disc surrogate samples. Therefore, the methods used for quality control, e.g. to characterise the content of the coating and the purity of the antibiotics are validated using the discs as surrogates. The type of surrogate samples that were used for non-clinical studies varied depending on the kind of test and the endpoints evaluated.

## Claims

1. Dummy device as a surrogate of an implant for mimicking a coating process and for determining coating properties thereof,
**Characterized by**
a base body with singular pieces made of an material used for manufacturing the implant assembled on said base body to form the dummy device for the purpose of coating by a coating process, wherein
the singular pieces can be dissembled from the base body after coating of the dummy device by the coating process such that the now coated singular pieces can be used for determining coating properties.

2. Dummy device according to claim 1, **characterized in that** the singular pieces are assembled on the outer surface of the base body.

3. Dummy device according to claim 1 or 2, **characterized in that** the singular pieces are assembled on the outer surface of the base body in corresponding recesses in the surface of the base body.

4. Dummy device according to one of the preceding claims, **characterized in that** the singular pieces are shaped disc-like, in particular annular discs, hexagonal discs, triangular discs or square like discs.

5. Dummy device according to one of the preceding claims, **characterized in that** the base body comprises a cylindrical shape, in particular a hexagonal cylindrical shape for mimicking a hip implant, a shape of a half shell, in particular for mimicking a knee implant or a rod.

6. Dummy device according to one of the preceding claims, **characterized in that** the singular pieces are shaped cylindrical.

7. Dummy device according to claim 6, **characterized in that** the cylindrical pieces are assembled on the rod for forming the dummy device and are dissembled after coating the such formed dummy device.

8. Dummy devices according to one of the preceding claims, **characterized in that** the surface of the singular pieces is surface treated, such as sandblasted or glass bead blasted.

9. Dummy device according to one of the preceding claims, **characterized in that** the coating is selected from a group comprising at least one antibiotic, in particular rifampicin, fosfomycin or a combination thereof, at least one porous coating, in particular calcium phosphate coating such as hydroxyapatite coating opt. with additives like collagen and other bioactive compounds.

10. Dummy device according to one of the preceding claims, **characterized in that** the coating process is selected from a group comprising dip-coating, spray-coating, ink jet coating, electrochemical coating.

11. Use of a dummy device according to one of the claims 1 to 10 as a surrogate of a coated implant in quality control for determining coating properties, in particular coating density and biocompatible properties.

12. Use of a dummy device according to claim 11, **characterized in that** the use comprises the steps of
a) assembling the singular pieces made of an material used for manufacturing the implant on a base body for forming the dummy device;
b) coating the dummy device with a suitable coating material using a suitable coating process;
c) dissembling the singular pieces from the base body after coating; and
d) analysing the coated singular pieces by determining coating properties thereof.

13. Use according to claim 12, **characterized in that** the singular pieces are assembled in step a) by incorporating the singular pieces in corresponding recesses on a base body resembling the shape of the implant to be tested.

14. Use according to claim 12, **characterized in that** the singular piece are assembled in step a) by aligning them on a rod as base body.

15. Use according to one of claims 12 to 14, **characterized in that** operating parameters of the coating process in step b) are selected such that said parameters are the same or at least highly similar to the operating parameters actually applied for coating an implant.

## Patentansprüche

1. Dummy-Vorrichtung als Surrogat eines Implantats zur Nachbildung eines Beschichtungsverfahrens und zur Ermittlung der Beschichtungseigenschaften desselben,
**gekennzeichnet durch**
einen Grundkörper mit singulären Stücken aus einem zur Herstellung des Implantats verwendeten Material, die an dem Grundkörper montiert sind, um die Dummy-Vorrichtung zwecks Beschichtung **durch** ein Beschichtungsverfahren zu bilden, wobei
die singulären Stücke nach Beschichtung der Dummy-Vorrichtung **durch** das Beschichtungsverfahren von dem Grundkörper abgenommen werden können, so dass die nun beschichteten singulären Stücke zur Ermittlung der Beschichtungseigenschaften herangezogen werden können.

2. Dummy-Vorrichtung nach Anspruch 1, **dadurch gekennzeichnet, dass** die singulären Stücke auf der Außenseite des Grundkörpers montiert sind.

3. Dummy-Vorrichtung nach Anspruch 1 oder 2, **dadurch gekennzeichnet, dass** die singulären Stücke auf der Außenseite des Grundkörpers in entsprechenden Ausnehmungen in der Oberfläche des Grundkörpers montiert sind.

4. Dummy-Vorrichtung nach einem der vorhergehenden Ansprüche, **dadurch gekennzeichnet, dass** die singulären Stücke scheibenartig geformt sind, insbesondere als ringförmige Scheiben, sechseckige Scheiben, dreieckige Scheiben oder quadratische Scheiben.

5. Dummy-Vorrichtung nach einem der vorhergehenden Ansprüche, **dadurch gekennzeichnet, dass** der Grundkörper eine zylindrische Form umfasst, insbesondere eine sechseckige zylindrische Form zur Nachbildung eines Hüftimplantats, eine Form einer Halbschale, insbesondere zur Nachbildung eines Knieimplantats, oder einen Stab.

6. Dummy-Vorrichtung nach einem der vorhergehenden Ansprüche, **dadurch gekennzeichnet, dass** die singulären Stücke zylindrisch geformt sind.

7. Dummy-Vorrichtung nach Anspruch 6, **dadurch gekennzeichnet, dass** die zylindrischen Stücke zur Bildung der Dummy-Vorrichtung an dem Stab montiert sind und nach dem Beschichten der so gebildeten Dummy-Vorrichtung abgenommen werden.

8. Dummy-Vorrichtung nach einem der vorhergehenden Ansprüche, **dadurch gekennzeichnet, dass** die Oberfläche der singulären Stücke oberflächenbehandelt ist, beispielsweise sandgestrahlt oder glasperlengestrahlt.

9. Dummy-Vorrichtung nach einem der vorhergehenden Ansprüche, **dadurch gekennzeichnet, dass** die Beschichtung aus einer Gruppe ausgewählt ist, die mindestens ein Antibiotikum umfasst, insbesondere Rifampicin, Fosfomycin oder eine Kombination davon, mindestens eine poröse Beschichtung, insbesondere eine Calciumphosphatbeschichtung wie zum Beispiel eine Hydroxyapatitbeschichtung, optional mit Zusätzen wie Collagen und anderen bioaktiven Verbindungen.

10. Dummy-Vorrichtung nach einem der vorhergehenden Ansprüche, **dadurch gekennzeichnet, dass** das Beschichtungsverfahren aus einer das Tauchbeschichten, Sprühbeschichten, Tintenstrahlbeschichten, elektrochemische Beschichten umfassenden Gruppe ausgewählt ist.

11. Verwendung einer Dummy-Vorrichtung nach einem der Ansprüche 1 bis 10 als Surrogat eines beschichteten Implantats bei der Qualitätskontrolle zur Ermittlung der Beschichtungseigenschaften, insbesondere der Beschichtungsdichte und der biokompatiblen Eigenschaften.

12. Verwendung einer Dummy-Vorrichtung nach Anspruch 11, **dadurch gekennzeichnet, dass** die Verwendung die folgenden Schritte umfasst:
a) Montieren der singulären Stücke aus einem zur Herstellung des Implantats verwendeten Material an einem Grundkörper, um die Dummy-Vorrichtung zu bilden;
b) Beschichten der Dummy-Vorrichtung mit einem geeigneten Beschichtungsmaterial unter Verwendung eines geeigneten Beschichtungsverfahrens;
c) Abnehmen der singulären Stücke von dem Grundkörper nach dem Beschichten; und
d) Analysieren der beschichteten singulären Stücke durch Ermittlung von Beschichtungseigenschaften der beschichteten singulären Stücke.

13. Verwendung nach Anspruch 12, **dadurch gekennzeichnet, dass** die singulären Stücke in Schritt a) durch Einbringen der singulären Stücke in entsprechende Ausnehmungen an einem Basiskörper montiert werden, der der Form des zu testenden Implantats ähnlich ist.

14. Verwendung nach Anspruch 12, **dadurch gekennzeichnet, dass** die singulären Stücke in Schritt a) dadurch montiert werden, dass sie auf einem Stab als Grundkörper ausgerichtet werden.

15. Verwendung nach einem der Ansprüche 12 bis 14, **dadurch gekennzeichnet, dass** die Betriebsparameter des Beschichtungsverfahrens in Schritt b) so ausgewählt sind, dass die genannten Parameter mit den zur Beschichtung eines Implantats tatsächlich angewandten Betriebsparametern identisch oder zumindest diesen sehr ähnlich sind.

## Revendications

1. Dispositif factice en tant que substitut d'un implant pour imiter un procédé de revêtement et pour déterminer des propriétés de revêtement de celui-ci,
**caractérisé par**
un corps de base avec des pièces uniques fabriquées d'un matériau utilisé pour fabriquer l'implant, assemblées sur ledit corps de base pour former le dispositif factice aux fins de revêtement par un procédé de revêtement, dans lequel
les pièces uniques peuvent être désassemblées du corps de base après revêtement du dispositif factice par le procédé de revêtement, de telle sorte que les pièces uniques à présent revêtues peuvent être utilisées pour déterminer des propriétés de revêtement.

2. Dispositif factice selon la revendication 1, **caractérisé en ce que** les pièces uniques sont assemblées sur la surface externe du corps de base.

3. Dispositif factice selon la revendication 1 ou 2, **caractérisé en ce que** les pièces uniques sont assemblées sur la surface externe du corps de base dans des évidements correspondants dans la surface du corps de base.

4. Dispositif factice selon l'une des revendications précédentes, **caractérisé en ce que** les pièces uniques sont en forme de disque, en particulier de disques annulaires, de disques hexagonaux, de disques triangulaires ou de disques de type carré.

5. Dispositif factice selon l'une des revendications précédentes, **caractérisé en ce que** le corps de base comprend une forme cylindrique, en particulier une forme cylindrique hexagonale pour imiter un implant de hanche, une forme de demi-coque, en particulier pour imiter un implant de genou ou une tige.

6. Dispositif factice selon l'une des revendications précédentes, **caractérisé en ce que** les pièces uniques sont de forme cylindrique.

7. Dispositif factice selon la revendication 6, **caractérisé en ce que** les pièces cylindriques sont assemblées sur la tige pour former le dispositif factice et sont désassemblées après revêtement dudit dispositif factice formé.

8. Dispositif factice selon l'une des revendications précédentes, **caractérisé en ce que** la surface des pièces uniques est traitée en surface, tel que par sablage ou projection de billes de verre.

9. Dispositif factice selon l'une des revendications précédentes, **caractérisé en ce que** le revêtement est choisi dans un groupe comprenant au moins un antibiotique, en particulier de la rifampicine, de la fosfomycine ou une combinaison de celles-ci, au moins un revêtement poreux, en particulier un revêtement de phosphate de calcium tel qu'un revêtement d'hydroxyapatite éventuellement avec des additifs comme le collagène et autres composés bioactifs.

10. Dispositif factice selon l'une des revendications précédentes, **caractérisé en ce que** le procédé de revêtement est choisi dans un groupe comprenant le revêtement par immersion, le revêtement par pulvérisation, le revêtement par jet d'encre, le revêtement électrochimique.

11. Utilisation d'un dispositif factice selon l'une des revendications 1 à 10 en tant que substitut d'un implant revêtu dans un contrôle qualité pour déterminer des propriétés de revêtement, en particulier des propriétés de densité et de biocompatibilité de revêtement.

12. Utilisation d'un dispositif factice selon la revendication 11, **caractérisée en ce que** l'utilisation comprend les étapes suivantes
a) l'assemblage des pièces uniques fabriquées d'un matériau utilisé pour fabriquer l'implant sur un corps de base pour former le dispositif factice ;
b) le revêtement du dispositif factice avec un matériau de revêtement approprié à l'aide d'un procédé de revêtement approprié ;
c) le désassemblage des pièces uniques du corps de base après revêtement ; et
d) l'analyse des pièces uniques revêtues par détermination de propriétés de revêtement de celles-ci.

13. Utilisation selon la revendication 12, **caractérisée en ce que** les pièces uniques sont assemblées dans l'étape a) en incorporant les pièces uniques dans des évidements correspondants sur un corps de base ressemblant à la forme de l'implant à tester.

14. Utilisation selon la revendication 12, **caractérisée en ce que** les pièces uniques sont assemblées dans l'étape a) en les alignant sur une tige en tant que corps de base.

15. Utilisation selon l'une des revendications 12 à 14, **caractérisée en ce que** des paramètres opérationnels du procédé de revêtement dans l'étape b) sont choisis de telle sorte que lesdits paramètres sont identiques ou au moins fortement similaires aux paramètres opérationnels effectivement appliqués pour le revêtement d'un implant.
